# EUROPÄISCHE PATENTSCHRIFT

(11) **EP 0 584 427 B1**
(45) Veröffentlichungstag und Bekanntmachung des Hinweises auf die Patenterteilung: **17.04.1996**
(21) Anmeldenummer: 92810644.2
(22) Anmeldetag: 24.08.1992
(51) Int. Cl.: F02B 41/10, F02B 37/10

(54) **Zweitakt-Hubkolbenbrennkraftmaschine**
Two cycle internal combustion engine
Moteur à combustion interne deux temps

(43) Veröffentlichungstag der Anmeldung: 02.03.1994
(73) Patentinhaber: NEW SULZER DIESEL AG, CH-8401 Winterthur (CH)
(72) Erfinder: Brunner, Heinrich, CH-8404 Winterthur (CH)
(74) Vertreter: Hammer, Bruno, Dr.

(56) Entgegenhaltungen:
- WO-A-80/00169
- DE-A- 3 224 006
- DE-A- 3 923 370
- GB-A- 2 157 772
- PATENT ABSTRACTS OF JAPAN vol. 12, no. 52 (M-668)(2899) 17. Februar 1988 & JP-A-62 199 929 (HINO MOTORS LTD) 2. September 1987
- ATZ AUTOMOBILTECHNISCHE ZEITSCHRIFT Bd. 93, Nr. 4, 1. April 1991, STUTTGART Seiten 242 - 248 , XP000217484 KÖRNER 'Neue Wege beim Turbocompoundantrieb'
- PATENT ABSTRACTS OF JAPAN vol. 12, no. 404 (M-757)(3251) 26. Oktober 1988 & JP-A-63 147 923 (ISUZU MOTORS LTD) 20. Juni 1988

## Beschreibung

Die Erfindung betrifft eine Zweitakt-Hubkolbenbrennkraftmaschine mit einer Nutzleistungsturbine, die von mindestens einem Teil des Abgases der Brennkraftmaschine beaufschlagt ist, wobei die aus dem Abgas gewonnene Leistung über ein mindestens zwei Wellen und eine drehelastische Kupplung aufweisendes Zahnradgetriebe auf die Kurbelwelle der Brennkraftmaschine übertragen wird.

Bei einer bekannten Maschine dieser Art ist die drehelastische Kupplung auf einer Welle des Getriebes angeordnet, die kein mit dem Kurbelwellenzahnrad kämmendes Zahnrad aufweist. Ausserdem ist das ganze Getriebe in einem besonderen Getriebegehäuse untergebracht, das seitlich am Gehäuse der Brennkraftmaschine angebracht ist. Bei diesem Getriebe besteht zwischen der Kurbelwelle und der die drehelastische Kupplung tragenden Welle des Getriebes ein Uebersetzungsverhältnis von ungefähr 4. In diesem Verhältnis werden dann auch von der Kurbelwelle ausgehende Torsionsschwingungsamplituden übersetzt, wobei Ueberbelastungen für die drehelastische Kupplung und die übrigen Bauteile des Getriebes sowie für die Nutzleistungsturbine entstehen können.

Der Erfindung liegt die Aufgabe zugrunde, eine Brennkraftmaschine der eingangs genannten Art dahingehend zu verbessern, dass die Amplituden der Torsionsschwingungen weniger hoch übersetzt werden und gleichzeitig eine platzsparendere Anordnung des Getriebes zu schaffen.

Diese Aufgabe wird erfindungsgemäss dadurch gelöst, dass die drehelastische Kupplung auf der Welle des Getriebes angeordnet ist, auf der das mit dem Kurbelwellenzahnrad kämmende Zahnrad des Getriebes befestigt ist, und dass mindestens die die drehelastische Kupplung aufweisende Welle des Getriebes im Gehäuse der Brennkraftmaschine gelagert ist.

Dadurch, dass die drehelastische Kupplung auf der vom Kurbelwellenzahnrad direkt angetriebenen Welle angeordnet ist, beträgt die Uebersetzung bis zu dieser Welle nur ungefähr 1,7. Dadurch wird auch die Uebersetzung der Amplituden der von der Kurbelwelle ausgehenden Torsionsschwingungen wesentlich verringert, wodurch Ueberbelastungen der drehelastischen Kupplung und der übrigen Getriebebauteile sowie der Nutzleistungsturbine drastisch vermindert werden. Obwohl die drehelastische Kupplung in der erfindungsgemässen Anordnung ein grösseres Drehmoment aufnehmen muss als in der bekannten Anordnung, muss sie nicht grösser gebaut werden, weil die Torsionsschwingungsamplituden an der drehelastischen Kupplung kleiner als bisher sind. Durch die Anordnung der drehelastischen Kupplung näher zur Kurbelwelle ergibt sich eine kompakte, platzsparende Konstruktion des Getriebes, das sich zum grössten Teil innerhalb des Maschinengehäuses unterbringen lässt. Sie ist deshalb auch kostengünstiger als die bekannte Ausführung.

Für den Fall dass es nötig wird, das Getriebe mit mehr als zwei Wellen zu versehen, wird nur die letzte, mit der Welle der Nutzleistungsturbine fluchtende Welle des Getriebes in einem besonderen Getriebegehäuse gelagert, das dann entsprechend klein ausgebildet und am Maschinengehäuse angeflanscht ist.

Ein Ausführungsbeispiel der Erfindung ist in der folgenden Beschreibung anhand der Zeichnung näher erläutert. Es zeigen:
- Fig.1: schematisch einen Vertikalschnitt durch eine Zweitakt-Brennkraftmaschine und
- Fig.2: einen Schnitt entsprechend dem gebrochenen Linienzug II - II in Fig.1 in grösserem Massstab.

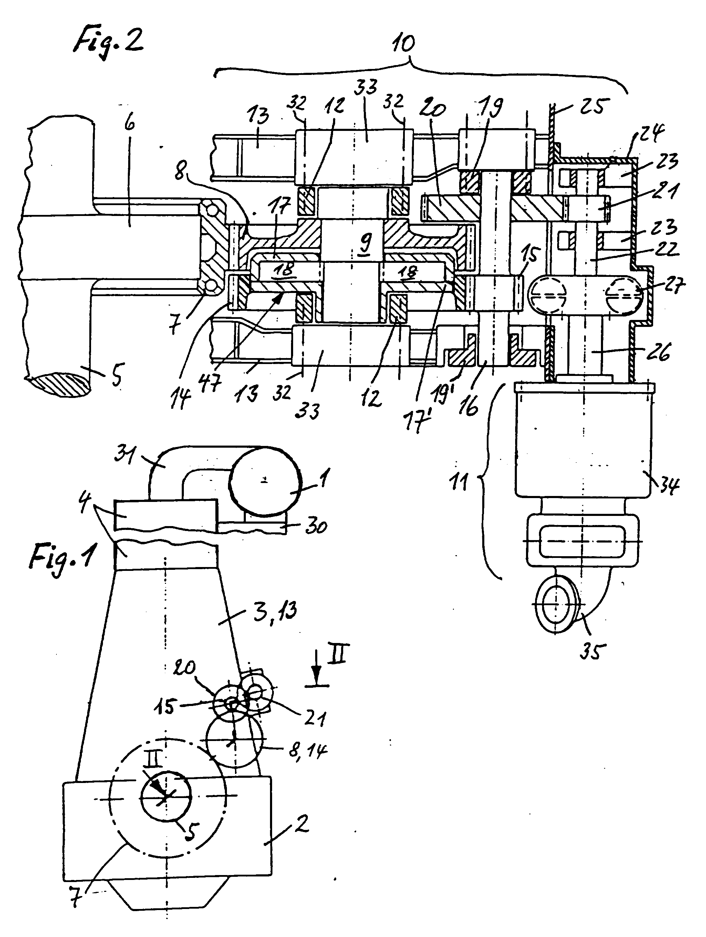

Gemäss Fig.1 umfasst die langsam laufende Hubkolbenbrennkraftmaschine der Kreuzkopfbauart, die nach dem Dieselverfahren arbeitet, eine Grundplatte 2, ein darauf abgestütztes, aus mehreren hintereinander angeordneten Ständern 13 zusammengesetztes Maschinengehäuse 3, einen mehrere Zylinder enthaltenden Zylinderblock 4, der auf das obere Ende des Maschinengehäuses aufgesetzt ist, und ein Auspuffsammelrohr 1. Das Auspuffsammelrohr 1 ist über eine Konsole 30 am Zylinderblock 4 abgestützt. Je Zylinder ist ein Auspuffkrümmer 31 vorgesehen, der am oberen Ende des Zylinderblocks 4 im Bereich eines nicht dargestellten Auslassventils angeschlossen ist und in das Auspuffsammelrohr 1 mündet. In den Zylindern findet also Längsspülung statt. An das Auspuffsammelrohr 1 ist eine nicht dargestellte, aus Gasturbine und Verdichter bestehende Ladegruppe in an sich bekannter Weise angeschlossen.

In der Grundplatte 2 ist in üblicher Weise eine Kurbelwelle 5 gelagert, die ausser den nicht dargestellten Kurbeln einen Flansch 6 (Fig.2) aufweist, auf den ein Kurbelwellenzahnrad 7 befestigt ist, z.B. durch Schrumpfen. Das Kurbelwellenzahnrad 7 kämmt mit einem ersten Zahnrad 8 eines mehrstufigen Getriebes 10, das die von einer Nutzleistungsgasturbine 11 abgegebene Leistung auf die Kurbelwelle 5 überträgt. Das Zahnrad 8 ist auf einer ersten Welle 9 befestigt, die mit ihren beiden Enden in je einem Lager 12 gelagert ist. Die beiden Lager 12 sind mittels Schrauben, die durch strichpunktierte Linien 32 angedeutet sind, an je einer Scheibe 33 der Ständer 13 lösbar befestigt. Mit Hilfe der Schrauben 32 lassen sich die Lager 12 justieren. Auf der ersten Welle 9 ist eine drehelastische Kupplung 47 der Bauart Geislinger vorgesehen. Sie besteht aus einem schalenförmigen Bauteil 17 und einem im wesentlichen scheibenförmigen Bauteil 17' sowie mehreren radialen Lamellen 18. Die Bauteile 17 und 17' bilden den Aussenteil der Kupplung 47 und sind auf der ersten Welle 9 drehbar gelagert. Die Lamellen 18 sind an ihren äusseren Enden mit dem Bauteil 17 fest verschraubt und greifen mit ihren inneren Enden in axial verlaufende Nuten auf der ersten Welle 9. Auf dem Aussenteil der Kupplung 47 ist ein zweites Zahnrad 14 befestigt, das mit einem Ritzel 15 auf einer zweiten Welle 16 kämmt. Die drehelastische Kupplung 47 hat den Zweck, dass von der Kurbelwelle 5 ausgehende Torsionsschwingungen über das Getriebe 10 nicht zur Nutzleistungsgasturbine 11 weitergegeben werden. Hierzu trägt bei, dass das Uebersetzungsverhältnis zwischen den Zahnrädern 7 und 8 nur etwa 1,7 beträgt.

Auch die zweite Welle 16 des Getriebes 10 ist mit ihren beiden Enden in Lagern 19 und 19' gelagert, die ihrerseits an Scheiben der Ständer 13 lösbar befestigt sind. Auf der zweiten Welle 16 ist ein Zahnrad 20 befestigt, das mit einem Ritzel 21 auf einer dritten Welle 22 des Getriebes 10 kämmt. Die Welle 22 ist in Lagerböcken 23 gelagert, die in einem besonderen Getriebegehäuse 24 angeordnet sind, das an eine Wand 25 angeflanscht ist, die mit den Ständern 13 verschweisst ist und die äussere Begrenzung des Maschinengehäuses 3 bildet. Das Getriebegehäuse 24 überspannt eine Oeffnung in der Wand 25, durch die hindurch die erste Welle 9 mit den Zahnrädern 8 und 9, der Kupplung 47 sowie den Lagern 12 und die zweite Welle 16 mit dem Ritzel 15, dem Zahnrad 20 und dem Lager 19 ein- und ausgebaut werden kann.

Die dritte Welle 22 fluchtet mit einer Welle 26, die den Abtriebsteil eines im Gehäuse 34 der Nutzleistungsgasturbine 11 untergebrachten, nicht näher dargestellten Planetengetriebes bildet, das mit dieser Turbine integriert ist. Mit 35 ist ein Gaseintrittsstutzen der Turbine 11 bezeichnet, der in nicht dargestellter Weise mit dem Auspuffsammelrohr 1 in Verbindung steht. Die Nutzleistungsturbine 11 ist gasseitig zur Gasturbine der Ladegruppe parallel geschaltet. Zwischen den Wellen 22 und 26 ist eine hydrodynamische Kupplung 27, z.B. der Bauart Voith, angeordnet.

Mit der hydrodynamischen Kupplung 27 wird eine weitere Isolierung der Nutzleistungsgasturbine gegen Torsionsschwingungen erreicht, die von der Kurbelwelle 5 ausgehen. Die hydrodynamische Kupplung ist entweder mit einer konstanten Oelfüllung versehen oder sie ist als von Oel durchflossene Kupplung mit Bremse ausgebildet, die dann zwischen dem Planetengetriebe und der Kupplung 27 angebracht ist.

Das Kurbelwellenzahnrad 7 dient auch zum Antrieb einer nicht dargestellten Steuer- oder Nockenwelle, die in Fig.1 auf der linken Seite des Maschinengehäuses 3 angeordnet ist und deren Zahnrad über ein Zwischenzahnrad mit dem Kurbelwellenzahnrad 7 im Eingriff steht. Das Getriebe 10 ist also unabhängig von dem Steuerwellenantrieb. Die Sternerwelle ihrerseits treibt Einspritzpumpen für den Brennstoff sowie Hubgeberpumpen für das Betätigen der Auslassventile an.

Abweichend von dem beschriebenen Ausführungsbeispiel kann das Kurbelwellenzahnrad 7 auch zweiteilig ausgebildet und durch Schrauben auf der Kurbelwelle 5 befestigt sein. Ferner kann die hydrodynamische Kupplung 27 zwischen den Wellen 22 und 26 entfallen.

## Patentansprüche

1. Zweitakt-Hubkolbenbrennkraftmaschine mit einer Nutzleistungsturbine, die von mindestens einem Teil des Abgases der Brennkraftmaschine beaufschlagt ist, wobei die aus dem Abgas gewonnene Leistung über ein mindestens zwei Wellen und eine drehelastische Kupplung aufweisendes Zahnradgetriebe auf die Kurbelwelle der Brennkraftmaschine übertragen wird, wobei
die drehelastische Kupplung auf der Welle des Getriebes angeordnet ist, auf der das mit dem Kurbelwellenzahnrad kämmende Zahnrad des Getriebes befestigt ist, und mindestens die die drehelastische Kupplung aufweisende Welle des Getriebes im Gehäuse der Brennkraftmaschine gelagert ist.

2. Brennkraftmaschine nach Anspruch 1, dadurch gekennzeichnet, dass das Getriebe mehr als zwei Wellen aufweist und dass die letzte mit der Welle der Nutzleistungsturbine fluchtende Welle des Getriebes in einem am Gehäuse der Brennkraftmaschine angeflanschten Getriebegehäuse gelagert ist, wogegen die übrigen Wellen des Getriebes im Gehäuse der Brennkraftmaschine gelagert sind.

3. Brennkraftmaschine nach Anspruch 2, dadurch gekennzeichnet, dass zwischen der Nutzleistungsturbine und der mit ihr fluchtenden Welle des Getriebes eine hydrodynamische Kupplung angeordnet ist.

4. Brennkraftmaschine nach Anspruch 3, dadurch gekennzeichnet, dass die hydrodynamische Kupplung im Getriebegehäuse untergebracht ist.

5. Brennkraftmaschine nach einem der Ansprüche 2 bis 4, dadurch gekennzeichnet, dass im Gehäuse der Nutzleistungsturbine ein Planetengetriebe integriert ist und dass das Gehäuse der Nutzleistungsturbine am Getriebegehäuse angeflanscht ist.

6. Brennkraftmaschine nach einem der Ansprüche 1 bis 5, dadurch gekennzeichnet, dass sie eine Steuerwelle aufweist, die über Zahnräder von dem Kurbelwellenzahnrad angetrieben ist.

## Claims

1. A twostroke reciprocating combustion engine with a useful performance turbine which is acted upon by at least part of the exhaust gas from the combustion engine, where the power gained from the exhaust gas is transmitted to the combustion engine crankshaft via toothed gearing exhibiting at least two shafts and a torsionally elastic coupling, whereby the torsionally elastic coupling is arranged on that shaft of the gear to which is fastened that gearwheel of the gear which meshes with the gearwheel on the crankshaft, and that at least that shaft of the gear which exhibits the torsionally elastic coupling is supported in the housing of the combustion engine.

2. A combustion engine as in Claim 1, characterized in that the gear exhibits more than two shafts and that the last shaft of the gear which is in line with the shaft of the useful performance turbine is supported in a gearbox flanged onto the housing of the combustion engine, whereas the rest of the shafts of the gear are supported in the housing of the combustion engine.

3. A combustion engine as in Claim 2, characterized in that a hydrodynamic coupling is arranged between the useful performance turbine and the shaft in line with it in the gear.

4. A combustion engine as in Claim 3, characterized in that the hydrodynamic coupling is housed in the gearbox.

5. A combustion engine as in one of the Claims 2 to 4, characterized in that an epicyclic gear is integrated into the housing of the useful-performance turbine and that the housing of the useful-performance turbine is flanged onto the gearbox.

6. A combustion engine as in one of the Claims 1 to 5, characterized in that it exhibits a control shaft which is driven via gearwheels from the crankshaft gearwheel.

## Revendications

1. Moteur à combustion interne à pistons alternatifs à deux temps avec une turbine de rendement utile, qui est actionnée par au moins une partie des gaz d'échappement du moteur à combustion interne, dans lequel la puissance recueillie à partir des gaz d'échappement est transmise par une boîte d'engrenages, présentant au moins deux arbres et un embrayage élastique à torsion, à l'arbre de vilebrequin du moteur à combustion interne, dans lequel l'embrayage élastique à torsion est disposé sur l'arbre de la boîte de vitesse, sur lequel est fixée la roue dentée de la boîte de vitesse qui engrène avec la roue dentée de l'arbre de vilebrequin, et au moins l'arbre de la boîte de vitesse, qui présente l'embrayage élastique à torsion, est monté dans le carter du moteur à combustion interne.

2. Moteur à combustion interne selon la revendication 1, caractérisé en ce que la boîte de vitesse présente plus de deux arbres et en ce que le dernier arbre de la boîte de vitesse, qui est aligné avec l'arbre de la turbine de rendement utile, est monté dans un carter de boîte de vitesse bridé sur le carter du moteur à combustion interne, les autres arbres de la boîte de vitesse étant montés par contre dans le carter du moteur à combustion interne.

3. Moteur à combustion interne selon la revendication 2, caractérisé en ce qu'entre la turbine de rendement utile et l'arbre de la boîte de vitesse qui est en alignement avec elle, on dispose un embrayage hydrodynamique.

4. Moteur à combustion interne selon la revendication 3, caractérisé en ce que l'embrayage hydrodynamique est logé dans le carter de la boîte de vitesse.

5. Moteur à combustion interne selon l'une des revendications 2 à 4, caractérisé en ce que dans le carter de la turbine de rendement utile on intègre un engrenage épicycloïdal et en ce que le carter de la turbine de rendement utile est bridé sur le carter de la boîte de vitesse.

6. Moteur à combustion interne selon l'une des revendications 1 à 5, caractérisé en ce qu'il présente un arbre de commande, qui est entraîné au moyen de roues dentées par la roue dentée de l'arbre de vilebrequin.
